# EUROPEAN PATENT SPECIFICATION

(11) **EP 3 799 587 B1**
(45) Date of publication and mention of the grant of the patent: **13.04.2022**
(21) Application number: 19856511.1
(22) Date of filing: 31.12.2019
(51) Int. Cl.: B32B 17/10

(54) **PRINTED GLASS, METHODS AND USES THEREOF**
BEDRUCKTES GLAS, VERFAHREN UND VERWENDUNGEN DAVON
FEUILLE DE VERRE IMPRIMÉE, PROCÉDÉS ET UTILISATIONS ASSOCIÉS

(30) Priority: 04.01.2019 PT 2019115245
(43) Date of publication of application: 07.04.2021
(73) Proprietor: Dissipation - Design E Inovação, Lda, 3780-524 Sangalhos (PT)
(72) Inventor: RAVAZZINI, Alessandra, 42014 Castellarano (RE) (IT)
(74) Representative: Patentree
(86) International application number: PCT/IB2019/061462
(87) International publication number: WO 2020/141453

(56) References cited:
- WO-A1-99/00197
- WO-A1-2005/003048
- WO-A1-2017/072521
- WO-A2-2007/079160
- US-A1- 2004 110 868
- US-A1- 2015 225 285
- US-A1- 2016 214 365
- US-A1- 2017 298 250
- Momentive Performance Materials: "Silquest* Silanes Selector and Handling Guide", , 31 December 2011 (2011-12-31), XP055690841, Retrieved from the Internet: URL:https://www.brenntag.com/media/documen ts/bsi/product_data_sheets/material_scienc e/momentive_silanes/silquest_silanes_selec tor_handling_guide.pdf [retrieved on 2020-04-30]

## Description

### Technical field

The present disclosure relates to a process for digital printing on glass, using ceramic inks and/or organic inks, a glass fixative composition, a method for printing decorative applications in glass.

### Background

The document WO2018158483 relates to a machine and method for multipass digital printing on glass sheets with minimised print travel. The machine is configured to recognise the largest dimension of the pattern to be printed in the X and Y directions, and to perform the multiple printing passes by moving the gantry in the X direction or by moving the carriage along the gantry in the Y direction.

The document US20160214365 relates to a method and apparatus for printing onto substrates, including glass and minor, uses ultraviolet-curable ink to print indicia onto the substrate. The method may be applied to a glass pane, for example for architectural glass, signage, and other uses. After curing the ink, the design is protected by laminating the pane.

These facts are disclosed in order to illustrate the technical problem addressed by the present disclosure.

### General Description

The invention relates to a digital printed glass comprising:
a first glass layer;
an organic ink layer bound to the glass;
metal decorative applications wherein the metallic decorative applications are engraved in the organic ink layer using an airbrush;
wherein said organic ink layer is bounded to the glass by an aqueous fixative solution for bounding the organic ink layer on the glass;
wherein the said aqueous fixative solution comprises methoxipropanol, water and a silane.

The use of the fixative composition of the present disclosure improved the resolution of the printed images. Additionally, the fixative solution of the present disclosure avoids the formation of air microbubbles and/ or the formation microcracks in the image in printed glass.

The organic ink of the present disclosure is made of fruit or vegetable-based pigments, also called "lake pigments". They are oil dispersible, which just means the colour dye will blend in with your skin more naturally with little to no clumping and will have a brighter colour effect as opposed to a dull, faded look.

In an embodiment, the digital printed glass comprising a layer of ethylene-vinyl acetate and a second glass layer making a sandwich structure.

In an embodiment, the metallic decorative applications are gold, silver, bronze, copper, aluminium, platinum, or mixtures thereof.

In an embodiment, the decorative applications, may further comprise a first catalyst for adhesion promoter agent.

In an embodiment, the decorative applications may further comprise a second catalyst as a crosslinker agent.

In an embodiment, glass fixative solution may comprise 90-97% (wt./wt.) methoxipropanol.

In an embodiment, glass fixative solution may comprise between 5-10% (wt./wt.) of water.

In an embodiment, glass fixative solution may comprise between 1-5% (wt./wt.) of Silane.

In an embodiment, the digital printing may comprise decorative applications comprising water up to 10% (wt./wt.).

In an embodiment, the decorative applications comprise metallic purpurin.

In an embodiment, the decorative applications comprise at most 3 (wt./wt.) metallic purpurin.

### Brief Description of the Drawings

The following figures provide preferred embodiments for illustrating the description and should not be seen as limiting the scope of invention.

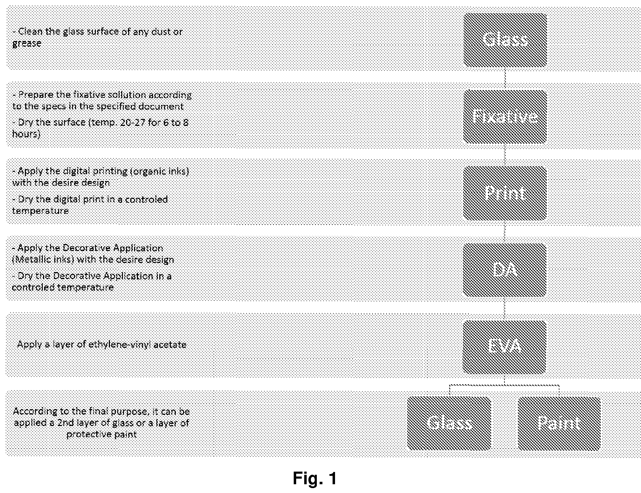

**Figure 1** - Fluxogram of a method for glass digital printing.

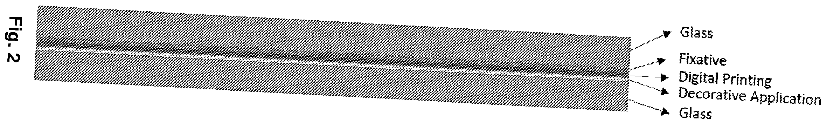

**Figure 2** - Layers of a digital printed glass.

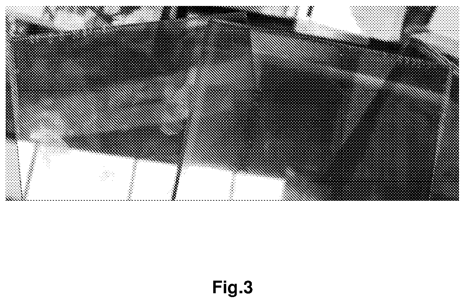

**Figure 3**-Formation of air microbubbles and/ or the formation microcracks in a printed glass without the fixative composition of the present disclosure.

### Detailed Description

The present disclosure is also further described, in particular, using embodiments of the disclosure. Therefore, the disclosure is not limited to the descriptions and illustrations provided. These are used so that the disclosure is sufficiently detailed and comprehensive. Moreover, the intention of the drawings is for illustrative purposes and not for the purpose of limitation.

The present disclosure relates to a Z digital printed glass comprising ceramic inks and/or organic inks, a glass fixative composition, and metallic decorative applications.

The digital printed glass is obtained by means of a process for digital printing in a glass surface with organic inks. The process includes a fixative step specifically for the inks used on a printer, and an additional process of adding decorative applications, providing a design/aesthetic solution for the final product, such as the imprinting of images or adding metallic effects like gold, cooper, bronze or mirroring.

It is disclosed that there's no known equipment, specified for printing on glass, mainly because there is a technical issue fixing the inks on the surface. There are two options known in the art for printing in glass with different inks: ceramic and organic inks.

In the first option, with ceramic inks, after printing, the glass enters into a kiln to hardener the inks on the glass. With the hardening process, the colours loose brightness and definition.

In the second option, belonging to the invention, the use of organic inks, requires a different process. Starting by applying the fixative solution disclosed in the present disclosure on the surface to be printed, where this solution is a fixative that allows the print to be fixed on the glass. After printing a lamination step protects the print and secures the glass (the lamination is a process that acquires safety to the glass).

In an embodiment, according to the aim of the product of the present disclosure, other process can be used. Applying a layer of protective paint on the back

Besides this part of the process, some decorative techniques for some aesthetic/design purposes: gold, bronze, silver, mirror, among others, are applied.

These decorative applications (DA) are applied locally with an airbrush. And the application process is specific for each type of decorative applications.

In an embodiment, on the digital printing as standard, the process guarantees the brightness of the colours and definition of the image/design. It can also be applied on humid areas once the print is protected by fixative solution.

In an embodiment, the decorative applications, is a distinguish finish giving other effects to the final product.

### DIGITAL PRINTING PROCESS

Preparation of the fixative composition for glass printing on a clean and without grease recipient:
1. Use a solvent methoxipropanol (93%) (wt./wt.);
2. Add deionized/ distilled water (5%) (wt./wt.);
3. Stir the solution moderately (200 rpm) and slowly add silane *ab110806 (2%)* (wt./wt.); continue to stir the solution for 1 hour.

Cleaning and treatment of the surface
1. Wash and clean the glass of all stains and grease;
2. Wash the glass on the washing machine and make sure it is stainless;
3. Place the glass on the printing area for 20 minutes;
4. Apply the fixative with the airbrush smoothly to achieve a homogeneous layer. After applying, the surface will have a lustreless finish;
5. Keep the glass on the printing area for 60 minutes for drying;
6. The surface is ready for printing. After printing no further heat treatment is necessary.

### DECORATIVE APPLICATIONS (DA) PROCESS

### Product preparation:

Use a clean recipient with polished surface to apply decorative applications (DA), by the following steps:
Weight the DA according with the specifications of that product colour/area per m²;
Add the first catalyst (adhesion promoter agent) and stir effectively;
Add the second catalyst (crosslinker agent) and stir again;
If necessary, add up to 5% of deionized/distilled water;
The solution has a lifetime of 6 to 8 hours.

Composition and application conditions:

**Table 1- Composition and application conditions of the DA**

| **MATERIAL** | **COMPOSITION ⁽¹⁾** | | **AIRBRUSH** | **WEIGHT/ m²** | **OBSERVATIONS** |
|---|---|---|---|---|---|
| PURPURIN SILVER | SM-GA20/S | **100%** | PRESSURE 3 | - | THE MATERIAL MUST HAVE PRIOR FIXATIVE APPLICATION IF THE PRODUCT HAS PRINTS |
| | PA03 | 3% | NOZZLE 3 | | |
| | RT04 | 4% | | | |
| PURPURIN GOLD | SM-OT20/2 | **100%** | PRESSURE 3 | - | THE MATERIAL MUST HAVE PRIOR FIXATIVE APPLICATION IF THE PRODUCT HAS PRINTS |
| | PA03 | 3% | NOZZLE 3 | | |
| | RT04 | 4% | | | |
| ALUMINIUM | ST-AL10/S | **100%** | PRESSURE 3 | 60-100 g ⁽¹⁾ | IF THE MIX PRESENTS GRAINS, SIEVE WITH MESH 10# |
| | PA03 | 3% | NOZZLE 1.9 | | |
| | RT04 | 4% | | | |
| GOLD (02- AD08/11) Gold leaf | PE-OR15/TIX | 81,6% | | 60-100 g ⁽¹⁾ | IF THE MIX PRESENTS GRAINS, SIEVE WITH MESH 10 # |
| | ST-AL10/S | 14,4% | PRESSURE 3 | | |
| | PE-RA15/TIX | 4% | NOZZLE 1.9 | | |
| | PA03 | 3% | | | |
| | RT04 | 4% | | | |
| COPPER (06-AD08/11) | PE-RA15/TIX | 69,7% | | 60-100 g ⁽¹⁾ | IF THE MIX PRESENTS GRAINS, SIEVE WITH MESH 10 # |
| | ST-AL10/S | 12% | PRESSURE 3 | | |
| | PE-OR15/TIX | 18,2% | NOZZLE 1.9 | | |
| | PA03 | 3% | | | |
| | RT04 | 4% | | | |

| | | | | | |
|---|---|---|---|---|---|
| ⁽¹⁾ Standard weight may be changed according to the pretended aesthetic effect | | | | | |

Drying process steps
1. After the application, dry the surface at room temperature (minimum 20°C) and at least for 6 to 8 hours.
2. Alternatively keep the surface at room temperature for 15 minutes and put in the kiln at 35-50°C for 45-60 minutes.

### COMPOSITION AND APPLICATION MODE

Adding the decorative applications with an airbrush
a) After applying the DA, dry the surface at room temperature of 20°C for 6-8 hours; or
b) Keep the surface at room temperature20°C for 15min and place it in a kiln for 45 to 60 min with temperatures of 35-50°C.

Furthermore, where the claims recite a composition, it is to be understood that methods of using the composition for any of the purposes disclosed herein are included, and methods of making the composition according to any of the methods of making disclosed herein or other methods known in the art are included, unless otherwise indicated or unless it would be evident to one of ordinary skill in the art that a contradiction or inconsistency would arise.

Where ranges are given, endpoints are included. Furthermore, it is to be understood that unless otherwise indicated or otherwise evident from the context and/or the understanding of one of ordinary skill in the art, values that are expressed as ranges can assume any specific value within the stated ranges in different embodiments of the invention, to the tenth of the unit of the lower limit of the range, unless the context clearly dictates otherwise. It is also to be understood that unless otherwise indicated or otherwise evident from the context and/or the understanding of one of ordinary skill in the art, values expressed as ranges can assume any subrange within the given range, wherein the endpoints of the subrange are expressed to the same degree of accuracy as the tenth of the unit of the lower limit of the range.

The disclosure should not be seen in any way restricted to the embodiments described and a person with ordinary skill in the art will foresee many possibilities to modifications thereof within the scope of the claims.

The above described embodiments are combinable. The dependent claims further set out particular embodiments of the disclosure.

## Claims

1. Digital printed glass comprising:
a first glass layer;
an organic ink layer bound to the glass;
metal decorative applications wherein the metallic decorative applications are engraved in the organic ink layer using an airbrush;
wherein said organic ink layer is bounded to the glass by an aqueous fixative solution for bounding the organic ink layer on the glass;
wherein the said aqueous fixative solution comprises methoxipropanol, water and a silane.

2. Digital printed glass according to the previous claim further comprising a layer of ethylene-vinyl acetate and/or a second glass layer.

3. Digital printed glass according to any of the previous claims wherein the metallic decorative applications are gold, silver, bronze, copper, aluminium, platinum, or mixtures thereof.

4. Digital printed glass according to any of the previous claims wherein the decorative applications further comprise a catalyst for the adhesion promotion.

5. Digital printed glass according to any of the previous claims, wherein the decorative applications further comprise a second catalyst as a crosslinker.

6. Digital printed glass according to any of the previous claims wherein the glass fixative comprises 90-97% (wt./wt.) of methoxipropanol.

7. Digital printed glass according to any of the previous claims wherein the glass fixative comprises between 5-10% (wt./wt.) of water.

8. Digital printed glass according to any of the previous claims wherein the glass fixative comprises between 1-5% (wt./wt.) of silane.

9. Digital printed glass according to any of the previous claims wherein the decorative applications comprise water up to 10% (wt./wt.).

10. Digital printed glass according to any of the previous claims wherein the decorative applications comprise metallic purpurin, preferably wherein the decorative applications comprise up most 3 (wt./wt.) metallic purpurin.

## Patentansprüche

1. Digital bedrucktes Glas, umfassend:
eine erste Glasschicht;
eine mit dem Glas verbundene organische Tintenschicht;
dekorative Metallapplikationen, wobei die dekorativen Metallapplikationen per Airbrush in die organische Tintenschicht eingraviert werden;
wobei die genannte organische Tintenschicht mit einer wässrigen Fixierlösung an das Glas gebunden wird, um die organische Tintenschicht mit dem Glas zu verbinden;
wobei die genannte wässrige Fixierlösung Methoxypropanol, Wasser und ein Silan enthält.

2. Digital bedrucktes Glas nach dem vorangehenden Anspruch ferner umfassend eine Schicht aus Ethylen-Vinylacetat und/oder eine zweite Glasschicht.

3. Digital bedrucktes Glas nach einem der vorangehenden Ansprüche, wobei die dekorativen Metallapplikationen aus Gold, Silber, Bronze, Kupfer, Aluminium, Platin oder Mischungen davon sind.

4. Digital bedrucktes Glas nach einem der vorangehenden Ansprüche, wobei die dekorativen Applikationen ferner einen Katalysator zur Haftverbesserung umfassen.

5. Digital bedrucktes Glas nach einem der vorangehenden Ansprüche, wobei die dekorativen Applikationen ferner einen zweiten Katalysator als Vernetzungsmittel umfassen.

6. Digital bedrucktes Glas nach einem der vorangehenden Ansprüche, wobei das Fixiermittel für Glas 90-97 % (Gew./Gew.) Methoxypropanol enthält.

7. Digital bedrucktes Glas nach einem der vorangehenden Ansprüche, wobei das Fixiermittel für Glas zwischen 5-10 % (Gew./Gew.) Wasser enthält.

8. Digital bedrucktes Glas nach einem der vorangehenden Ansprüche, wobei das Fixiermittel für Glas zwischen 1-5 % (Gew./Gew.) Silan enthält.

9. Digital bedrucktes Glas nach einem der vorangehenden Ansprüche, wobei die dekorativen Applikationen bis zu 10 % (Gew./Gew.) Wasser enthalten.

10. Digital bedrucktes Glas nach einem der vorangehenden Ansprüche, wobei die dekorativen Applikationen metallisches Purpurin umfassen, wobei die dekorativen Applikationen bevorzugt bis zu maximal 3 (Gew./Gew.) metallisches Purpurin umfassen.

## Revendications

1. Verre imprimé numérique comprenant:
une première couche de verre ;
une couche d'encre organique liée au verre ;
des applications décoratives métalliques dans lequel les applications décoratives métalliques sont gravées dans la couche d'encre organique à l'aide d'un aérographe ;
dans lequel ladite couche d'encre organique est liée au verre par une solution fixatrice aqueuse pour lier la couche d'encre organique au verre ;
dans lequel ladite solution fixatrice aqueuse comprend du méthoxypropanol, de l'eau et un silane.

2. Verre imprimé numérique selon la revendication précédente comprenant également une couche d'éthylène-acétate de vinyle et/ou une seconde couche de verre.

3. Verre imprimé numérique selon l'une quelconque des revendications précédentes, dans lequel les applications décoratives métalliques sont en or, argent, bronze, cuivre, aluminium, platine, ou des mélanges de ceux-ci.

4. Verre imprimé numérique selon l'une quelconque des revendications précédentes, dans lequel les applications décoratives comprennent également un catalyseur pour la promotion d'adhérence.

5. Verre imprimé numérique selon l'une quelconque des revendications précédentes, dans lequel les applications décoratives comprennent également un second catalyseur en tant qu'agent de réticulation.

6. Verre imprimé numérique selon l'une quelconque des revendications précédentes, dans lequel le fixateur de verre comprend 90 à 97% (poids/poids) de méthoxypropanol.

7. Verre imprimé numérique selon l'une quelconque des revendications précédentes, dans lequel le fixateur de verre comprend entre 5 et 10% (poids/poids) d'eau.

8. Verre imprimé numérique selon l'une quelconque des revendications précédentes, dans lequel le fixateur de verre comprend entre 1 et 5% (poids/poids) de silane.

9. Verre imprimé numérique selon l'une quelconque des revendications précédentes, dans lequel les applications décoratives comprennet jusqu'à 10% d'eau (poids/poids).

10. Verre imprimé numérique selon l'une quelconque des revendications précédentes, dans lequel les applications décoratives comprennent la purpurine métallique, de préférence dans lequel les applications décoratives comprennent jusqu'à un maximum de 3 (poids/poids) de purpurine métallique.
